Europäisches Patentamt

European Patent Office

Office européen des brevets

(19)

(11) Veröffentlichungsnummer: **0 271 915 B1**

(12) # EUROPÄISCHE PATENTSCHRIFT

(45) Veröffentlichungstag der Patentschrift: **20.05.92**

(51) Int. Cl.⁵: **A23B 7/00**, A23L 3/18

(21) Anmeldenummer: **87118805.8**

(22) Anmeldetag: **18.12.87**

(54) **Verfahren zum Sterilisieren von stückigen Lebensmitteln sowie Vorrichtung dafür.**

(30) Priorität: **18.12.86 DE 3643366**

(43) Veröffentlichungstag der Anmeldung:
**22.06.88 Patentblatt 88/25**

(45) Bekanntmachung des Hinweises auf die
Patenterteilung:
**20.05.92 Patentblatt 92/21**

(84) Benannte Vertragsstaaten:
**BE DE FR GB NL**

(56) Entgegenhaltungen:
**EP-A- 0 003 721**
**CH-A- 534 612**
**DE-A- 1 692 088**
**US-A- 4 543 263**

(73) Patentinhaber: **PFANNI-WERKE OTTO ECKART KG**
**Grafinger Strasse 6**
**W-8000 München 80(DE)**

(72) Erfinder: **Kluge, Günter, Dr. Dipl.-Ing.**
**Johann-Hackl-Ring 21**
**W-8011 Grasbrunn 1(DE)**
Erfinder: **Prasch, Edgar, Dr. Dipl.-Ing.**
**Itzling 9**
**W-8050 Freising(DE)**
Erfinder: **Fink, Angelika, Dr.**
**Alte Post-Strasse 46**
**W-8050 Freising(DE)**
Erfinder: **Cerny, Gerhard, Dr.**
**St. Johann Strasse 29**
**W-8000 München 50(DE)**

(74) Vertreter: **Patentanwälte Deufel, Hertel, Lewald**
**Postfach 26 02 47 Isartorplatz 6**
**W-8000 München 26(DE)**

**Beschreibung**

Die Erfindung betrifft ein Verfahren zum Sterilisieren von stückigen Lebensmitteln, insbesondere Wurzel- und Knollengemüsen, vor allem Kartoffeln gemäß dem Oberbegriff des Anspruchs 1, sowie eine Vorrichtung dafür gemäß Anspruch 6.

In den Unteransprüchen sind vorteilhafte Ausführungsformen der Erfindung enthalten.

Bekanntlich sind frische aber auch gegarte Gemüse in stückiger Form nicht sehr lange haltbar ohne wesentlich an Qualität und Aussehen zu verlieren.

Neben dem Lagern bei niedrigen Temperaturen (Kühlen, Gefrieren), dem Zusatz von Konservierungsstoffen und dem Wasserentzug durch Trocknen, stellt das Hitzebehandeln eines der wichtigsten Verfahren dar, um Lebensmittel haltbar zu machen.

Die Haltbarkeit eines Lebensmittels wird durch chemische, Physikalische und mikrobielle Vorgänge beeinflußt.

Während chemische und Physikalische Reaktionen, insb. die Sensorik (Farbe, Geschmack, Geruch, Konsistenz, Textur) verändern, bewirken insbesondere mikrobielle Veränderungen Gefahren in hygienischer und gesundheitsgefährdender Sicht.

Speziell durch die Hitzebehandlung eines Lebensmittels kann in Kombination von Erhitzungstemperatur und Erhitzungsdauer je nach Produkt, Milieu, Art und Verbreitung der Mikroorganismen weitgehend absolute Sterilität, d.h. Keimfreiheit erzielt werden. Dabei wird die vollständige Abtötung aller Mikroorganismen als biologische Sterilität bezeichnet. Sie kommt für Lebensmittel praktisch nicht in Frage, da die hochhitzeresistente Bakterienflora in gemäßigtem Klima keine Gefahrenquelle darstellt.

Gefordert wird "kommerzielle Sterilität", wobei das Produkt in der Verpackung frei sein muß von vegetativen Keimen und Sporen pathogener oder bedingt pathogener Mikroorganismen (das Kriterium ist Clostridium botulinum), von Toxinen, von vegetativen Bakterien und von vermehrungsfähigen Schimmelpilzen und Hefen.

Entscheidend für die Schädigung der Mikroorganismen ist hier vorrangig der Grad der thermischen Belastung des Produktes,
da dieser Aufschluß gibt über die Hitzeschädigung von vorhandenen Mikroorganismen, wobei Anfangsverkeimung, Mikroorganismenart, Produktzusammensetzung und Lagerbedingungen als entscheidene Kriterien zu nennen sind.

Parallel zum Ziel der Hitzeschädigung bzw. Hitzabtötung der Mikroorganismen ergeben sich aber auch unerwünschte Produktveränderungen chemischer und physikalischer Art.

Die Zusammenhänge zwischen zeitlicher Hitzeeinwirkung bei verschiedenen Temperaturen einerseits und Grad der Schädigung des Produktes, von Einzelkomponenten oder Mikroorganismen andererseits, zeigen in der Regel logarithmischen Verlauf.

Hieraus ist ersichtlich, daß durchwegs die Abtötung/Schädigung von Mikroorganismen durch Hitze im Hochtemperaturbereich ab ca. 125°C schneller erfolgt als die Schädigung des Lebensmittels selbst (Mikroorganismen werden durchwegs 5 bis 10 mal stärker geschädigt als das Lebensmittel selbst bei gleichen Bedingungen).

Diese Tatsache legt man zugrunde bei sogenannten UHT- oder HTST-Verfahren (Ultrahochtemperatur- oder Hochtemperatur-Kurzzeit-Verfahren),bei denen die thermische Belastung des Produkts bei hohen Temperaturen über einen kurzen Zeitraum erfolgt. Die dabei angewandten Temperaturen und Zeiten liegen im Sekunden- sowie untersten Minutenbereich und weisen Temperaturen zwischen 125°C und 160°C auf.

Bei diesen Bedingungen wird erreicht, daß kommerzielle Sterilität möglich ist, während die Produktschädigung in Grenzen gehalten wird.

UHT-Prozesse sind als sehr qualitätsschonende thermische Verfahren einzustufen und haben große Bedeutung im Rahmen der Aseptiktechnologie erlangt. Bei der Aseptiktechnologie wird das Lebensmittel selbst außerhalb der Verpackung haltbar gemacht (z.B. durch UHT-Verfahren) und anschließend rekontaminationsfrei in vorsterilisierte Verpackungen abgefüllt.

Im Vergleich zur traditionellen Sterilisation wird bei der Aseptiktechnologie eine bessere Produktqualität (Textur, Farbe, Geschmack, Erhaltung der ernährungsphysiologischen Eigenschaften) erreicht, da die thermische Belastung des Füllgutes deutlich gemindert ist.

Die Aseptiktechnologie in Verbindung mit UHT-Verfahren wurde ursprünglich im Rahmen der Milchhaltbarmachung eingeführt. Daneben hat diese Technologie zusehends Bedeutung im Bereich der Getränke sowie Frucht- und Gemüsesaftverarbeitung erzielt. Während die Aseptiktechnologie in Verbindung mit den UHT-Verfahren bei flüssigen und homogenen Produkten weitgehend Stand der Technik darstellt, ist diese Technologie für komplexere Produkte (heterogene Produktgemische, flüssige Produkte mit stückigen Anteilen, stückige Produkte) noch in den Anfängen begriffen. Die Vorteile der Aseptiktechnologie in Verbindung mit UHT-Verfahren liegen in einer höheren Qualität durch geringere Belastung des Produktes sowie in Kosteneinsparung durch geringeren Energieverbrauch u. z.T. einfachere Verpackung.

Als Nachteil wird insbesondere relativ hoher technischer Aufwand aufgrund der erforderlichen Sterilisationsbedingungen sowie etwas kürzere Haltbarkeitszeiten gegenüber klassisch sterilisierten Produkten genannt. Heterogene Lebensmittel, wie Suppen und Eintöpfe, die neben einer flüssigen oder breiigen Komponente stückige Anteile (Gemüse und Fleisch)enthalten werden in der Regel als gesamte Mischung hitzesterilisiert, wobei aufgrund der unterschiedl. Wärmeleitfähigkeit häufig eine Übersterilisation der flüssigen Komponente und deutliche Konsistenzminderung der stückigen Anteile zu verzeichnen sind.

Die vereinzelt angebotene getrennte Sterilisation von flüssiger Komponente und Stückkomponente zeigt hierbei wesentliche Vorteile, insbesondere was die Übersterilisation für einzelne Komponenten betrifft.

Der Erfolg hängt aber auch hier letztendlich von einer optimalen Sterilisation der Stückchen ab, wobei die Sterilisation von Stücken unterschiedl. Größe ohne Aufgußflüssigkeit bisher große Probleme bereitet hat.

Versuche mit speziellen Methoden (Mikrowelle) haben noch keinen großen Erfolg gezeigt.

Die von der Milch- bzw. Fruchtsaftsterilisation bekannten Verfahren UHT und HTST sind in dieser Richtung bisher weitgehend nicht beachtet worden.

Ein Beispiel für ein Hoch-Kurzzeit-Verfahren mit Aufgußflüssigkeit ist die DE-OS 24 10 283, welche die Hitzebehandlung von Lebensmitteln, insbesondere Gemüse, Kartoffeln oder Obst durch 1- bis 10-minütiges Vorerhitzen bei 70 bis 100°C und 1- bis 10-minütiges Druckgaren mit Wasser oder wässrigen Lösungen als Heizmedium bzw. Aufgußflüssigkeit bei 110 bis 170°C, zegt. Das Vorliegen der Aufgußflüssigkeit bewirkt einen guten Wärmeübergang, aber einen starken Auslaugeffekt, so daß bei dem dann notwenigen Abtrennen der Aufgußflüssigkeit Lebensmittelinhaltsstoffe zwangsläufig verloren gehen.

Die DE-OS 16 92 224 zeigt die Sterilisierung von verpackten Lebensmitteln, wobei beim Sterilisieren selbst 5 bis 10 min lang bei 1 bis 10 mm Quecksäure vorevakuiert wird und dann reiner Dampf von 80 bis 150°C eingeleitet und das Gut dann 5 bis 15 min bei 120 bis 125°C belassen wird, worauf ein neutrales steriles Gas so eingeleitet wird, daß ein Gegendruck im Autoklaven entsteht und die Behälter den atmosphärischen Druck ausgleichen. Demnach wird bei der eigentlichen Sterilisation bei Unterdruck gearbeitet. Ein Druckverfahren zeigt die US-PS 4 543 263, wobei auch eine längere Druckkühlung erfolgt und ggfs. auch mit einer Brühe des zu sterilisierenden Nahrungsmittels gekühlt wird.

Es besteht demnach ein Bedarf an einem gutdurchführbaren, relativ einfachen Verfahren und der zugehörigen Vorrichtung zur Sterilisierung (zur Erzielung von kommerzieller Sterilität) von stückigen Lebensmitteln, insbesondere Wurzel- und Knollengemüsen, z.B. Kartoffeln, Karotten und Sellerie, durch ein qualitätsschonendes Verfahren, also ohne Aufgußflüssigkeit, mit Hinblick auf kontinuierliche Betriebsweise und Eignung für Aseptiktechnologie bzw. Schaffung der Voraussetzungen für aseptisches Abpacken von sterilen Produkten mit mehr oder weniger stückigen Anteilen. Der Begriff "stückig" bedeutet die übliche Verwendungsgröße des stückigen Lebensmittels, z.B. Würfel von 5 bis 15 mmm Kantenlänge oder Scheiben von 5 bis 15 mm Dicke.

Ein besonderes Problem sind dabei z.B. Kartoffelstücke von üblicher Größe, d.h. in Würfeln bis 10 × 10 mmm oder in Scheiben von vorzugsweise ca. 4 bis 7 mm Scheibendicke.

Hier wie bei Lebensmitteln, besonders Knollen- und Wurzelgemüsen allgemein ist insbesondere auch die Gefahr des Abriebes beim Transport durch die Sterilisationsanlage besonders groß, so daß ein weiteres Problem hinzutritt, nämlich die Garung und den Transport des Gutes so zu führen, daß einerseits die gewünschte Sterilität erzielt, jedoch andererseits das Produkt nicht auch noch mechanisch geschädigt wird.

Dies wird erreicht, indem die Sterilisation in einem Sattdampfautoklaven kontinuierlich oder diskontinuierlich und bei unterschiedlichen Druck- und Arbeitsbereichen für die Be- und Entlastung des Produktes durchgeführt wird, nämlich durch Vorevakuieren und anschließender direkter Sattdampfbehandlung bei 125 bis 160°C mit einem Sattdampfdruck von 2, 3 bis 8 bar, insbesondere von 4 bis 8 bar bei Verweilzeiten von 40 bis 360 s und anschließendem Herausdrücken des Sattdampfes aus der Kammer mit kaltem Sterilgas, insbesondere Luft und Entspannen auf Atmosphärendruck in etwa 20 bis 60 s. Dies bewirkt eine doppelte Kühlung durch den Expansionseffekt und das Sterilgas. Wenn man während der ganzen Behandlung 125°C nicht überschreitet, kann eine Sterilisierzeit von 400 s erforderlich sein, wenn man nicht gleichzeitig den Druck von den sich bei 125°C einstellenden 2,3 bar auf z.B. 4 bar erhöht.

Der Sattdampfdruck kann insbesondere 5 bis 6 bar betragen, wenn die Temperatur 145 bis 155°C beträgt.

Diese Art der Entspannung zeigt bessere Texturergebnisse als langsamere Entspannung (Übergarung) oder Kombination aus Luftspülung/Evakuierung oder schlagartige Entspannung (mechanische Zellschädigung).

Die Vorbehandlung der Lebensmittel ist identisch mit den üblichen bekannten Verarbeitungsprozessen, d.h. für das Beispiel Kartoffel bzw. Gemüse: Der Rohstoff wird prinzipiell gewaschen, ggfs. geschält und in Stücke optimaler Größe geschnitten. Je nach Produkt kann ein spezieller Blachierschnitt vor der eigentlichen Haltbarmachung erforderlich werden. Es wird jedoch darauf hingewiesen, daß grundsätzlich übermäßiges Blanchieren im Hinblick auf die thermische Belastung des Produktes vermieden werden sollte.

Zwischenlagerungen der rohen Kartoffelstücke oder ähnlicher Gemüsestücke sollten in entsprechenden Wässern, z.B. angereichert mit NaHSO$_3$ erfolgen, wie dies bekannt ist.

Wie erwähnt wird die Sterilisation in Chargenbetrieb oder kontinuierlich in einem Sattdampfautoklaven durchgeführt. Bei kontinuierlichem Betrieb sind für die Transportbandvorrichtung bekannte Ein- und Austrittsschleusenkammern (z.B. US-PS 2 343 266) sowie spezielle Kammern/Segmente, um unterschiedliche Druck- und Arbeitsbereiche für die Be- und Entlastung zu gewährleisten, erforderlich. Das abgestufte Be- und Entlasten des Produktes ist für die spätere Textur der Stücke von großer Bedeutung.

Zunächst wird die Sterilisationskammer, in der sich das Produkt auf speziellen Abstellflächen aus Drahtgewebe befindet, vorevakuiert, auf einen Druck von etwa 50 bis 150 mbar, vorzugsweise 50 bis 100 mbar. Dies dauert je nach Kammergröße, Temperatur und anhaftendem Oberflächenwasser und vor allem in Abhängigkeit von der verwendeten Pumpe von weniger als 1 min bis zu maximal einigen Minuten, z.B. 0,5 bis 2 min. Direkt im Anschluß daran wird mit Sattdampf von 125 bis 160°C beaufschlagt. Vorzugsweise wird ein Überdruck, nämlich 4 bis 8 bar angewandt.

Je nach Art der Verkeimung, der Behandlungstemperatur, der Schüttung (also der Dicke der Schüttlage) und der Stückgröße werden Verweilzeiten von 40 bis 360 s erforderlich. Das riterium für erforderliche thermische Belastung zur Erzielung kommerzieller Sterilität wird durch erforderliche Abtötung von 12 Zehnerpotenzen an Cl.botulinum gestellt.

Anschließend wird der Sattdampf mit kaltem Sterilgas, insbesondere Sterilluft, aus der Kammer gedrückt und diese in etwa 20 bis 60 s auf Atmoshärendruck entspannt, um somit schnellstmöglich zu kühlen und Nachkocheffekt zu vermeiden.

Das so sterilisierte Produkt geht dann in der Praxis zur Abfüllstation, wo entweder vor dem Verpacken oder beim Verpacker dosiert und die Packung dann verschlossen wird.

Die erhaltenen Produkte werden anhand der noch vorhandenen Keimbelastung (Oberflächen- und Kernverkeimung, natürliche Verkeimung und künstlich erzeugte Verkeimung) sowie durch Texturmessung (Texturmessgerät Fa. Stevens) der sterilisierten Stücke unter Bezugnahme zum Garegrad beurteilt.

Die Erfindung wird anhand von Kartoffeln in den beigefügten Figuren und im späteren Beispiel erläutert.

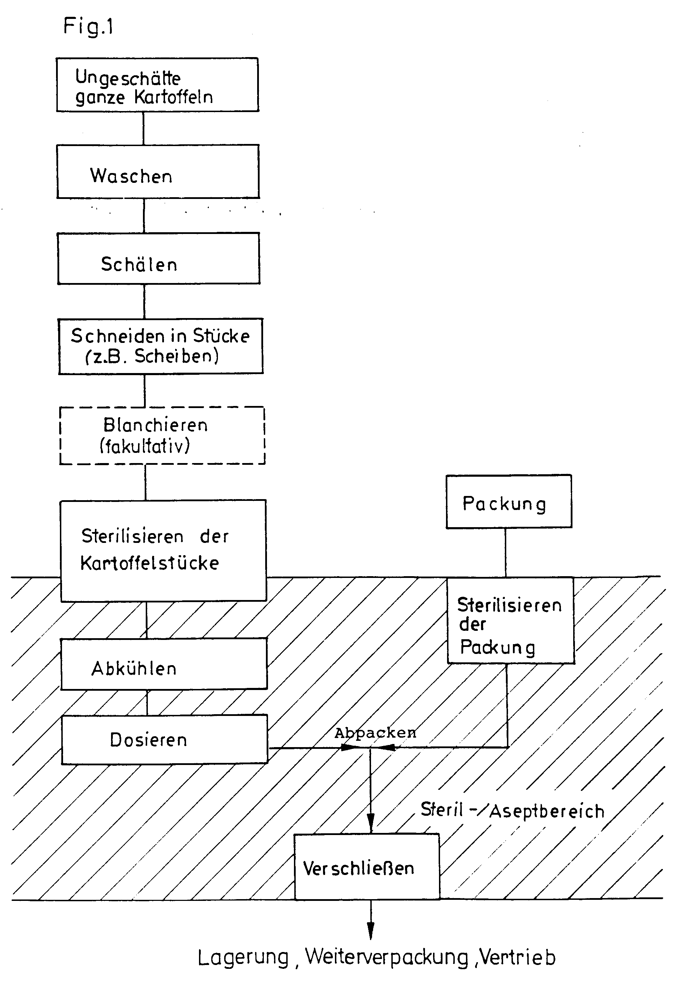

Die beigefügte Fig. 1 zeigt den schematischen Verfahrensablauf, beginnend von ungeschälten ganzen Kartoffeln bis zur verschlossenen sterilen Verpackung.

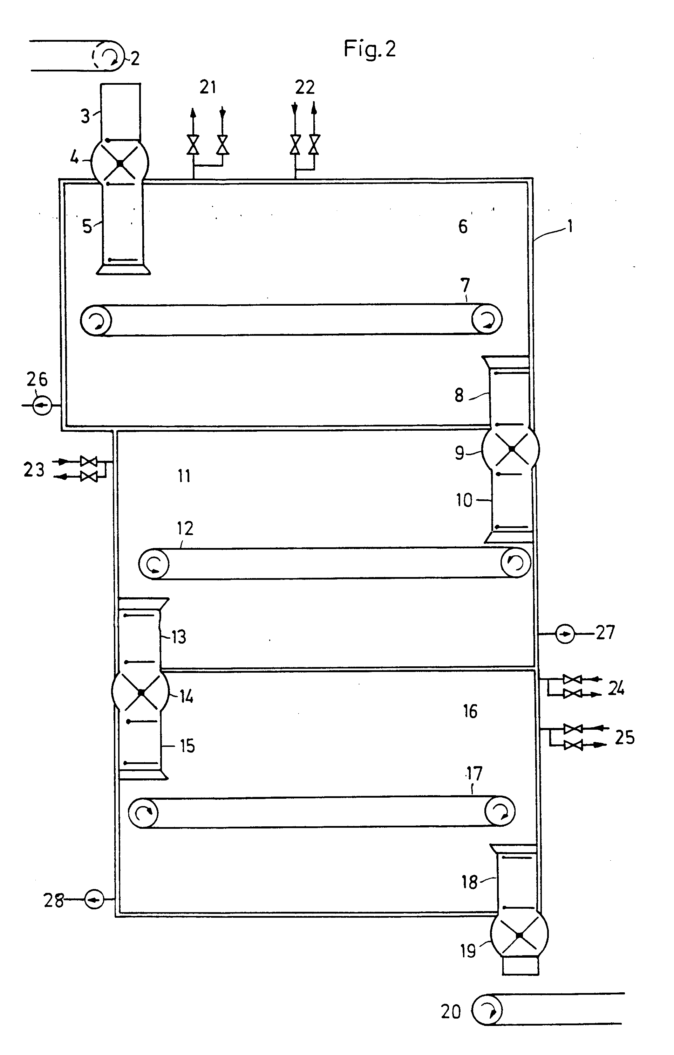

Die Fig. 2 zeigt eine Sterilisationsvorrichtung, die erfindungsgemäß mit verschiedenen Druckzonen ausgestattet ist und ein kontinuierliches Arbeiten gestattet.

Über das Produktzufuhrband 2 werden die ggfs. blanchierten Kartoffel- oder Gemüsestücke einem Zwischensilo 3 mit Absperrklappe zugeführt, von welchem sie über das Druckschleusenrad 4 in das weitere Zwischensilo 5, das wie auch alle weiteren Zwischensilos eine Absperrklappe hat, eingeführt werden. Vom Silo 5 gelangen die Gemüsestücke in die Vorevakuierungskammer 6, den ersten Raum der Gesamtanlage 1, wo sie auf das Transportband 7 fallen, auf welchem sie eine festgesetzte Verweilzeit transportiert und dann in das Zwischensilo 8 abgegeben werden. Über die Leitung 26 kann der Kondensatabzug erfolgen. Das Druckschleusenrad 9 befördert die Gemüsestücke in das Zwischensilo 10, von wo sie auf das Transportband 12 gelangen, das sie innerhalb einer vorgegebenen Zeit durch die Sterilisationskammer 11 führt. Vom Band 12 fallen die Gemüsestücke in das Zwischensilo 13 und werden von dort über das Druckschleusenrad 14 in das Zwischensilo 15 befördert, von wo sie auf das Transportband 17 fallen, das sie in einer ebenfalls vorgegebenen Zeit durch die Entspannungskammer 16 führt. Vom Band 17 fallen die Stücke in das Zwischensilo 18, von wo sie über ein Druckschleusenrad 19 auf das Produktaustragband fallen, das sie zur Packstation führt. Der Ausgang aus der Schleuse 19 und das Band 20 liegen ebenfalls im Steril-Aseptikbereich, ebenso wie die Packstation Durch entsprechend getaktete Schaltung von Silos, Schleusenrädern und Transportvorrichtungen kann ein kontinuierlicher Produktstrom eingestellt werden.

Die Leitungen 21 bedeuten die Evakuierungsleitungen während die Leitungen 22 die Dampfversorgung bezeichnen, ebenso wie die Leitungen 23 und 24. Leitung 25 zeigt die Sterilbelüftung und die Leitungen 27 und 28 sind, ebenso wie die schor erwähnte Leitung 26, Kondensatableitungen.

Die Schnelligkeit der Förderbänder 7, 12 und 17 kann je nach gewünschter Dauer der Vorevakuierung, der Sterilisation und der Entspannung eingestellt werden, wobei die Zeiten in den Kammern 6 und 16 etwas vom Druck und damit der Temperatur in der Kammer 11 abhängen. Je höher dort Druck und Temperatur sind, destoweniger muß vorevakuiert werden, was die Evakuierungszeit verkürzt und destoweniger schnell muß die Entspannung in der Kammer 16 erfolgen, was die Entspannungszeit verlängert. Da dies gegenläufi-

4

ge Betriebsbedingungen sind, hat es sich als zweckmäßig erwiesen, in der Praxis bei 140 bis 160°C Sattdampf, was einem Druck von ca. 4 bis 6,5 bar entspricht, wobei man jedoch vorzugsweise noch etwas zusätzlichen Druck aufgibt, zu arbeiten, was eine Sterilisationszeit von 150 bis 250 s bei 145 bis 155°C, ein Vakuum beim Vorevakuieren von ca. 50 bis 80 mbar in Kammer 6 und eine Entspannungszeit von 20 bis 40 s auf einen Druck nahe Atmosphärendruck in Kammer 16 ergibt, was bedeuten kann, daß die Kammer 6 erst mit zeitlicher Verzögerung gegenüber den Kammer 11 gefüllt wird.

Zur zeitlichen Abstimmung kann natürlich nicht nur die Schnelligkeit der Transportbänder, sonderen auch deren Länge variiert werden.

Mit einer solchen Vorrichtung kann man Gemüsescheiben, insbesondere Kartoffelstückchen bzw. Kartoffelscheiben ausgewählter Größe, z.B. von 4 bis 6 mm Dicke oder Würfel von 6 x 6 mm, Stäbchen von 50 x 5 x 5 mm oder Schnitzel von 5 bis 7 mm Lochdurchmesser der Schnitzelmaschine bei etwa 150°C innerhalb von ca. 200 s sterilisieren, wobei die Stücke in loser Schüttung auf Transportbänder aus Drahtgewebe in einer Schütthohe bis zu 10 cm, vorzugsweise bis zu 5 cm aufgebracht sind, und der Sattdampfdruck 5 bis 6 bar beträgt. Bei anderen Gemüsesorten oder bei stückigen Lebensmitteln, die nicht Gemüse sind, wie bei Fleischstückchen, können die optimalen Bedingungen in wenigen Routineversuchen festgestellt werden.

Das folgende Beispiel erläutert die Erfindung:

Rohe, ganze Kartoffeln der Sorte "Siglinde" unregelmäßiger Größenverteilung werden mechanisch geschält (Kaborundschälanlage) und in Scheiben mit 5 mm Dicke geschitten.

Die noch rohen Scheiben werden in Behältern mit kaltem Wasser,zur Farberhaltung mit 0,06 % $NaHSO_3$ versetzt, zwischengelagert.

5 kg der rohen Kartoffelscheiben werden auf einer Haltevorrichtung, bestehend aus Drahtgewebe, in einer ca. 5 cm hohen Schüttung ausgebracht und in einem Sattdampf-Sterilisationsautoklaven eingebracht.

Nach Befüllung und Vorevakuierung der Sterilisationskammer auf 75 mbar wird selbige direkt mit Sattdampf von 150°C/4,4358 $10^{-5}$ Pa (150°C/5 at) beaufschlagt und 200 s bei diesen Verhältnissen belassen.

Anschließend erfolgt Spülung der Sterilisationskammer mit kalter Steriluft und innerhalb ca. 40 s Entspannung auf Atmosphärendruck.

Bei Überprüfung der Wirksamkeit des UHT-Dampfsterilisationsverfahrens wurden die Endverkeimung von ursprünglich natürlich und künstlich (mit Cl.sporogenes) verkeimten Kartoffelpartien ermittelt. Zudem wurde der Verlauf der Kerntemperatur von Einzelscheiben gemessen.

Die Textur/Konsistenz der behandelten Scheibe wurde durch ein Texturmeßgerät der Fa. Stevens gemessen. Hiernach dringt ein spezieller Prüfzylinder mit konstanter Geschwindigkeit in die Kartoffelscheibe als Meßgut ein, wobei als Maß für die Festigkeit/Textur die Kraft gemessen wird, die sich dem Prüfkörper entgegenstellt.

Je nach thermischer Behandlung der Scheiben, verbunden mit Texturänderung/Garegrad und davon abhängender Kraftanwendung können 5 Texturklassen angegeben werden, die den Zustand von roh bis gar, weich, matschig, beschreiben (Tab.1).

Tabelle 1

| | Klasse 1 | Klasse 2 | Klasse 3 | Klasse 4 | Klasse 5 |
| | >10 N | 10 ÷ 7 N | 7 — 4 N | 4 — 2 N | >2 N |
| | rohe Kartoffel | noch roher Charakter | halb gar sehr fest | halb gar noch fest | gar weich |

**Texturklassen von Kartoffeln nach feuchtthermischer Behandlung**

Unter Zugrundelegung einer erforderlichen Abtötung von 5 DCl. sporogenes (Testkeim der künstlichen Verkeimung, um gesicherte Ergebnisse zu erhalten) ist bei 150°C Sattdampftemperatur eine Verweilzeit von 200 s erforderlich. Bei einer Sattdampftemperatur von 125°C mußte die Hitzebehandlung auf 400 s ausgedehnt werden, wenn nicht der Druck von den 125°C entsprechenden 2,3 bar auf z.B. 4 bar erhöht wird.

Da das Ziel der thermischen Behandlung die kommerzielle Sterilität bei noch fester Produktstruktur (Klasse 4) ist, ergat die Ultrahocherhitzung bei 150°C das gewünschte Produkt mit einer gleichmäßigen festen Konsistenz über die ganze Scheibe verteilt, in einer annehmbaren Zeit.

Lagerversuche dieses Produktes nach aseptischer Abfüllung in Schalen unter Inertgasatmosphäre ergaben Mindesthaltbarkeiten von 9 Monaten.

Die küchenmäßige Zubereitung solcher erfindungsgemäß sterilisierter verpackter Kartoffelscheiben in Form des allseits bekannten Bratkartoffelgerichtes lieferte ein Produkt mit erheblich besserer Qualität (Textur) als der von vergleichbaren Produkten aus herkömmlicher Behandlung (traditionelles Sterilisationsverfahren bei Dosen). Dieses Produkt steht qualitativ im Unterschied zu manchen sterilisierten Produkten, die eine ungleichmäßige Festigkeit/Textur aufweisen; dies reicht von püreeartiger, gekochter Randschicht bis zu einem noch weitgehend rohen, festen Innenkernbereich.

Die haltbar gemachten Kartoffelstücke oder -scheiben können im Bedarfsfall mit steril gemachten Gewürzen und/oder Soßen-oder Dressingkomponenten versetzt und so als Halbfertig-oder Fertiggerichte abgepackt werden.

Legende zu Fig. 2

| | |
|---|---|
| 1 | Sterilisationsvorrichtung mit verschiedenen Druckzonen |
| 2 | Produktzufuhrband |
| 3 | Zwischersilo mit Absperrklappen |
| 5 | " |
| 8 | " |
| 10 | " |

13      "
15      "
18      "
4       Druckschleusenrad
9       "
14      "
19      "
6       Vorevakuierungskammer
7       Transportband als Verweilzeiteinrichtung
12      "
17      "
11      Sterilisationskammer
16      Entspannungskammer
20      Produktaustragsband zur Packstation
21      Evakuierungsstation
22      Dampfversorgung
23      "
24      "
25      Sterilbelüftung
26      Kondensatableitung
27      "
29      "

**Patentansprüche**

1.   Verfahren zur Sterilisierung von unverpackten, lose geschütteten stückigen Lebensmitteln, insbesondere Wurzel- und Knollengemüsen, in Scheiben oder Stücken überliche Größe, vorzugsweise mit einer maximalen Abmessung von 7 mm nach üblichem Schälen und ggf. Blanchieren, dadurch gekennzeichnet, daß die Sterilisation durchgeführt wird,
   - indem das Gut ohne Aufgußflüssigkeit in einem ersten Schritt vorevakuiert wird und
   - anschließend in einem zweiten Schritt direkt mit Sattdampf von 125 bis 160°C mit einem Sattdampfdruck von 2,3 bis 8 bar, insbesondere von 4 bis 8 bar für eine Verweilzeit von 40 bis 360 Sekunden, beaufschlagt wird und
   - anschließend der Dampf aus der Kammer mit kaltem, sterilem Inertgas, vorzugsweise Sterilluft, herausgedrückt und diese innerhalb von 20 bis 60 Sekunden auf Atmosphärendruck entspannt und
   - das Gut ggf. steril abgepackt wird.

2.   Verfahren nach Anspruch 1, dadurch gekennzeichnet, daß der Sattdampfdruck 5 bis 6 bar und die Temperatur 145 bis 155°C beträgt.

3.   Verfahren nach Anspruch 1 oder 2, dadurch gekennzeichnet, daß das stückige Gut in einer Schütthöhe in loser Schüttung bis zu 10 cm, vorzugsweise bis zu 5 cm auf eine gut dampfdurchlässige Unterlage aufgebracht wird.

4.   Verfahren nach den Ansprüchen 1 bis 3, dadurch gekennzeichnet, daß die Sterilisation 150 bis 250 Sekunden bei 145 bis 155°C durchgeführt wird.

5.   Verfahren nach den Ansprüchen 1 bis 4, dadurch gekennzeichnet, daß Kartoffelstücke oder -scheiben bis zu 5 mm Dicke sterilisiert werden.

6.   Vorrichtung zur Durchführung des Verfahrens nach Anspruch 1 in Form einer Sterilisationskammer (11) mit druckdichter Eingabe- und Ausgabevorrichtung und einer Fördervorrichtung (12) zwischen Eingabe- und Ausgabevorrichtung mit einer Evakuierungsleitung (22), Dampfzufuhrleitung (23), Dampfabfuhrleitung (27) und Kondensatableitung (28), dadurch gekennzeichnet, daß die Kammer (11) für eine Druckentlastung von 4 bis 8 bar auf Atmosphärendruck innerhalb von 20 bis 60 Sek. unter gleichzeitiger Sterilgasleitung eingerichtet ist.

7

**7.** Vorrichtung nach Anspruch 6, gekennzeichnet durch

- eine Vorevakuierungskammer (6) mit druckdichter Eingabe- und Abgabevorrichtung sowie eine die Kammer (6) von der Eingabe- zur Abgabevorrichtung durchlaufenden Transportvorrichtung (7) sowie einer Evakuierungs- (21), Dampfzufuhr- (22) und Kondensatabfuhrleitung (26),
- eine Sterilisationskammer (11) mit druckdichter Eingabe- und Abgabevorrichtung sowie einer Transportvorrichtung (12) zwischen Eingabe- und Abgabevorrichtung und Dampfzufuhr- (23) sowie Kondensatabzugsleitungen (28) und
- daran anschließend eine Entspannungskammer (16) mit druckdichter Zufuhrvorrichtung und einer, ggf. druckdichten, Abfuhrvorrichtung sowie einer Transportvorrichtung (17) zwischen Zufuhr- und Abgabevorrichtung sowie Dampfzuleitung (24), Sterilgaszuleitung (25), Entspannungsleitung (25) und Kondensatableitung (28).

**8.** Vorrichtung nach Anspruch 6 oder 7, gekennzeichnet durch jeweils zwei Zwischensilos (8,10; 13,15) mit Absperrklappe, jeweils als Einbring- oder Ausgabevorrichtung, wobei die beiden Zwischensilos (8,10; 13,15) jeweils durch ein Druckschleusenrad (9, 14) druckfest getrennt sind.

**9.** Vorrichtung nach einem der Ansprüche 6, 7 oder 8, gekennzeichnet durch ein um Rollen laufendes Förderband aus Drahtgewebe als Transportvorrichtung zwischen Eingabe- und Abgabevorrichtung in jeder Kammer.

**Claims**

**1.** Process for sterilising loose bulk foods in pieces, in particular root and tuber vegetables, in slices or pieces of conventional size, preferably having a maximum dimension of 7 mm, following conventional peeling and with or without blanching, characterised in that the sterilisation is carried out
- by in a first step pre-evacuating the material without covering liquid and
- subsequently in a second step directly treating the material with saturated steam at 125 to 160°C at a saturated steam pressure of 2.3 to 8 bar, in particular from 4 to 8 bar, for a residence time of 40 to 360 seconds and
- subsequently displacing the steam from the chamber using cold, sterile inert gas, preferably sterile air, and decompressing the chamber to atmospheric pressure within 20 to 60 seconds and
- packaging the material aseptically or non-aseptically.

**2.** Process according to Claim 1, characterised in that the saturated steam pressure is 5 to 6 bar and the temperature is 145 to 155°C.

**3.** Process according to Claim 1 or 2, characterised in that the material in pieces is deposited in a loose bed to a depth of up to 10 cm, preferably up to 5 cm, on a support highly permeable to steam.

**4.** Process according to Claims 1 to 3, characterised in that the sterilisation is carried out for 150 to 250 seconds at 145 to 155°C.

**5.** Process according to Claims 1 to 4, characterised in that potato pieces or potato slices up to 5 mm thick are sterilized.

**6.** Device for carrying out the process according to Claim 1 in the form of a sterilization chamber (11) having pressure-tight feed and discharge devices and a transport device (12) between the feed and discharge devices which has a vacuum line (22), steam feed line (23), steam discharge line (27) and condensate outlet line (28), characterised in that the chamber (11) is equipped for a pressure reduction from 4 to 8 bar to atmospheric pressure within 20 to 60 seconds with simultaneous introduction of sterile gas.

**7.** Device according to Claim 6, characterised by
- a pre-evacuation chamber (6) having pressure-tight feed and delivery devices and also a transport device (7) running through the chamber (6) from the feed device to the delivery device and also a vacuum line (21), steam feed line (22) and condensate outlet line (26),

8

- a sterilization chamber (11) having pressure-tight feed and delivery devices and also a transport device (12) between the feed and delivery devices and a steam feed line (23) and condensate removal line (28) and
- joined to these a pressure reduction chamber (16) having a pressure-tight supply device and a pressure-tight or non-pressure-tight removal device and also a transport device (17) between the supply and delivery devices and also a steam feed line (24), sterile gas feed line (25), pressure reduction line (25) and condensate outlet line (28).

8. Device according to Claim 6 or 7, characterised by in each case two intermediate silos (8, 10; 13, 15) having a closing flap, each as an introduction or discharge device, the two intermediate silos (8, 10; 13, 15) each being divided in a pressure-tight manner by a pressure lock wheel (9, 14).

9. Device according to one of Claims 6, 7 or 8, characterised by a wire mesh conveyor belt running around rollers as a transport device between the feed and delivery devices in each chamber.

**Revendications**

1. Procédé de stérilisation d'aliments en morceaux, non emballés et versés en vrac, en particulier de légumes à racines ou à tubercules, en rondelles ou en morceaux ayant une dimension usuelle, de préférence une dimension maximale de 7 mm après un épluchage usuel et éventuellement après blanchiment, caractérisé en ce qu'on effectue la stérilisation
   - en soumettant le produit à une mise sous vide préalable, sans apport de liquide, au cours d'une première opération,
   - ensuite, au cours d'une deuxième opération, on le soumet directement à de la vapeur saturée, de 125 à 160°C, à une pression de vapeur saturée de 2,3 à 8 bar, en particulier de 4 à 8 bar, pendant un temps de séjour de 40 à 360 secondes, et
   - ensuite, on chasse la pression de la chambre avec un gaz inerte froid et stérile, de préférence de l'air stérile, et on détend ce dernier à la pression atmosphérique, en l'espace de 20 à 60 secondes, et
   - on retire le produit et on l'emballe, éventuellement de façon stérile.

2. Procédé selon la revendication 1, caractérisé en ce que la pression de vapeur saturée est de 5 à 6 bar et la température est de 145 à 155°C.

3. Procédé selon la revendication 1 ou 2, caractérisé en ce que le produit en morceaux, déversé en vrac à une hauteur de déversement allant jusqu'à 10 cm, de préférence jusqu'à 5 cm, est amené sur un support bien perméable à la vapeur.

4. Procédé selon les revendications 1 à 3, caractérisé en ce qu'on effectue la stérilisation pendant 150 à 250 secondes, à une température comprise entre 145 et 155°C.

5. Procédé selon les revendications 1 à 4, caractérisé en ce que les morceaux ou rondelles de pommes de terre sont stérilisés jusqu'à une épaisseur de 5 mm.

6. Dispositif pour la mise en oeuvre du procédé selon la revendication 1, se présentant sous la forme d'une chambre de stérilisation (11) comportant un dispositif d'amenée et un dispositif de déversement étanches et un dispositif de transport (12) situé entre le dispositif d'amenée et le dispositif de déversement, avec une conduite de vide (22), une conduite d'amenée de vapeur (23), une conduite d'évacuation de vapeur (27) et une conduite d'évacuation de condensat (28), caractérisé en ce que la chambre (11) est conçue pour être amenée à la pression atmosphérique, avec une détente de pression de 4 à 8 bar en l'espace de 20 à 60 secondes, avec introduction simultanée d'un gaz stérile.

7. Dispositif selon la revendication 6, caractérisé par :
   - une chambre de mise sous vide préalable (6) comportant un dispositif d'amenée et un dispositif de déversement étanches, ainsi qu'un dispositif de transport (7) traversant la chambre, du dispositif d'amenée jusqu'au dispositif de déversement, ainsi qu'une conduite de vide (21), une conduite d'amenée de vapeur (22) et une conduite d'évacuation de condensat (26),

- une chambre de stérilisation (11) comportant un dispositif d'amenée et un dispositif de déversement étanches, ainsi qu'un dispositif de transport (12) situé entre le dispositif d'amenée et le dispositif de déversement, et une conduite d'amenée de vapeur (23), ainsi qu'une conduite d'évacuation de condensat (28), et

- une chambre de détente (16) contiguë, comportant un dispositif d'amenée étanche et un dispositif d'évacuation, éventuellement étanche, ainsi qu'un dispositif de transport (17) situé entre le dispositif d'amenée et le dispositif d'évacuation, ainsi qu'une conduite d'amenée de vapeur (24), une conduite d'amenée de gaz stérile (25), une conduite de détente (25) et une conduite d'évacuation de condensat (28).

8. Dispositif selon la revendication 6 ou 7, caractérisé en ce qu'il comporte à chaque fois deux silos intermédiaires (8, 10 ; 13, 15) comportant un clapet d'arrêt servant à chaque fois de dispositif de chargement ou de déversement, les deux silos intermédiaires (8, 10 ; 13, 15) étant séparés l'un de l'autre, à chaque fois, par une roue de sas sous pression (9, 14), de façon résistante à la pression.

9. Dispositif selon une des revendications 6, 7 et 8, caractérisé en ce qu'il comporte une bande transporteuse en toile métallique, tournant autour de rouleaux, comme dispositif de transport entre le dispositif d'amenée et le dispositif de déversement de chaque chambre.

Fig.1

Ungeschätte ganze Kartoffeln → Waschen → Schälen → Schneiden in Stücke (z.B. Scheiben) → Blanchieren (fakultativ) → Sterilisieren der Kartoffelstücke → Abkühlen → Dosieren

Packung → Sterilisieren der Packung

Abpacken

Steril-/Aseptbereich

Verschließen

Lagerung, Weiterverpackung, Vertrieb

11

Fig.2